(19) Europäisches Patentamt
European Patent Office
Office européen des brevets

(11) EP 1 481 811 A1

(12) **EUROPEAN PATENT APPLICATION**

(43) Date of publication:
**01.12.2004 Bulletin 2004/49**

(21) Application number: **03253327.5**

(22) Date of filing: **28.05.2003**

(51) Int Cl.[7]: **B41M 5/00**, C09D 171/03, C08L 71/03, C08K 3/34, C08K 3/36

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **CLARIANT INTERNATIONAL LTD.**
**4132 Muttenz (CH)**

(72) Inventor: **The designation of the inventor has not yet been filed**

(54) **Aqueous white pigment compositions**

(57) Aqueous, white mineral pigment-based coating compositions (P) comprising

(A) white mineral pigment particles ($A_1$) and ($A_2$), wherein, referred to the dry forms,

($A_1$) are colloidal, non-porous, white mineral pigment particles of an average particle size in the range of 5 to 80 nm, wherein > 99 % of the particles are of a particle size < 100 nm,
and ($A_2$) are micro-porous, white mineral pigment particles of an average particle size in the range of 0.5 to 25 µm, wherein > 99 % of the particles are of a particle size in the range of 0.1 to 100 µm,

(B) a binder,

and
(C) a cationic, crosslinked polymer obtainable by exhaustive reaction of at least one crosslinking at least difunctional amine (G) and optionally a monofunctional amine (H) with a chloroterminated addition product (F) of epichlorohydrin to an oligofunctional alcohol (E),
and optionally
(D) one or more formulation additives
their production and use for coating, the coated substrates and their use, in particular as jet-ink recording substrates, especially for colour ink-jet printing.



Printed by Jouve, 75001 PARIS (FR)

## Description

With increasing use of paper and plastic films or foils as substrates for ink-jet printing the quality of the substrate used for ink-jet recording plays an increasing role, in particular with a view to the quality of the recorded print e.g. as for intensity and sharpness of the recorded image and in order to avoid disturbing appearances such as feathering, mottling, bleeding, showing through, or/and as for rate of ink absorption, uniformity of the pattern and fastnesses. This is in particular of importance in the wide spread various kinds of hard copy equipments for jet-ink mono-colour prints (mainly black) or multi-colour images, such as in copying machines, printers and facsimile machines, and with the various kinds of jet-inks employed.

In US patent 4,446,174 there are described coatings suitable for multicolour jet-ink prints, comprising mineral pigments and adhesive. In US patents 4460637, 4478910, 4780356, 5352503 and 5965244 there have been proposed coatings with particularly defined mineral white pigments and particularly defined characteristic parameters of the mineral particles, such as particle size and porosity. In some cases there have also been added some cationic polymers, such as the cationic polymers mentioned in US patents 4,446,174 or 5965244: polydiallyldimethylammonium chloride, polydimethylaminoethyl methacrylate, polymethacryloyloxyethyl-β-hydroxyethyl-dimethylammonium chloride, cationic starch, polyvinylbenzyl-trimethylammonium chloride, polyquaternary amines, polyimines, aluminium polymeric complexes or copolymers of vinylpyrrolidone with dimethylaminoethyl methacrylate or with methylvinylimidazole. While in some cases ink-jet prints of high optical density, mainly of black prints may be achieved, the overall visual impression may nevertheless be substantially impaired where the quality of the print, e.g. as resulting from any feathering, mottling (black and various colours), showing through and bleeding or/and any evident lack in sharpness, is unsatisfactory, especially in colour and multi-colour ink-jet prints of high resolution, so that even prints of otherwise positive properties such as high colour density and water fastness may result in a very unsatisfactory visual impression. This negative impression may even increase with time, when the light fastness of the coating and/or of the prints is insufficient. In some cases the quality of the print may vary with the employed quality of the jet-ink and/or the employed ink-jet printing system or machine.

It has now surprisingly been found that with the below defined coating compositions (P) comprising the defined white mineral pigment particles (A), the binders (B) and the defined crosslinked etherammonium polymers (C), and optionally formulation additives (D), there may be produced coated paper and coated films or foils of outstanding coating and jet ink recording properties, in particular with a view to printing quality, especially in colour prints, and to light fastness, and which is highly independent from the employed jet-ink quality and jet-ink printing system or machine, and further with optical brighteners there may be achived coatings of outstanding whiteness.

The invention relates to the defined coating compositions, their production and use, the coated substrates and their use, in particular as substrates for ink-jet recording.

The invention thus firstly provides an aqueous, white mineral pigment-based coating composition (P) comprising

(A) white mineral pigment particles ($A_1$) and ($A_2$), wherein, referred to the dry forms,

($A_1$) are colloidal, non-porous, white mineral pigment particles of an average particle size in the range of 5 to 80 nm, wherein > 99 % of the particles are of a particle size < 100 nm,
and ($A_2$) are micro-porous, white mineral pigment particles of an average particle size in the range of 0.5 to 25 µm, wherein > 99 % of the particles are of a particle size in the range of 0.1 to 100 µm,

(B) a binder,
and (C) a cationic, crosslinked polymer obtainable by exhaustive reaction of at least one crosslinking at least difunctional amine (G) and optionally a monofunctional amine (H) with a chloroterminated addition product (F) of epichlorohydrin to an oligofunctional alcohol (E), and optionally
(D) one or more formulation additives.

The compositions (P) may be produced analogously to known methods by mixing the components in the presence of water. A process for the production of aqueous, white mineral pigment-based coating compositions (P) is in particular characterised in that an aqueous solution of (C) is admixed with an aqueous slurry of (A) and (B), optionally in the presence of a component (D), and any optional further (D) is added.

(A) comprise in general known inorganic substances as usually employed as white pigments or fillers (or loading agents), and which more particularly are conventionally employed in non-coloured form especially in papermaking.

The inorganic pigment (A) may be any such substance, naturally occurring and optionally physically modified, or synthetically produced, and preferably as employed in particular in paper coatings and of the defined particle size

and porosity characteristics. (A) may include mineral substances and synthetically produced inorganic substances, such as silica, alumina, titanium dioxide, zinc oxide and sulphide, and inorganic salts, e.g. silicates, aluminates, titanates, sulphates and carbonates, of low valence metal ions, mainly of alkali metal ions, alkaline earth metal ions or earth metal ions, especially of sodium, potassium, magnesium, calcium, barium and/or aluminium. The following may be mentioned as examples: calcium carbonate in various forms (mineral natural form or synthetic precipitated and/or crystallised forms, e.g. rhombohedral, scalenohedral, prismatic or spherical calcite, clustered or discrete acicular aragonite), titanium dioxides (rutile, anatase), potassium titanates, zinc oxide, zinc sulphide, various sulphates (lithopone, calcium sulphates such as gypsum or anhydrite, barium sulphates such as baryte or blanc fixe, calcium sulphoaluminate mainly satin white), various forms of silica (e.g. amorphous silica such as diatomite, precipitated or fumed silica, or silica xerogel), sodium silico-aluminate, various silicates (e.g. chrysotile, talc, china clay in various degrees of whiteness, bentonite or montmorillonite), various alumina hydrates (such as boehmite and pseudo boehmite), and optionally further metal oxides (such as iron oxide, magnesium oxide or calcium oxide), in the respective particle size and porosity properties, as correspond to ($A_1$) or ($A_2$).

As colloidal - or primary - particles ($A_1$) there may be employed known pigment particles of the defined particle size, or particles that may be produced in the defined particle size according to known methods or analogously to methods known per se, e.g. by desolubilisation (precipitation, crystallisation) from aqueous true or colloidal solutions, preferably sols, or by disaggregation of corresponding larger particles (in particular of aggregates of colloidal particles) e.g. by grinding, milling, or subjecting to vibration, ultrasonic treatment or shearing (e.g. in a homogeniser) and, if required or desired, selecting a defined particle size range e.g. by sieving and screening. Some methods for the production of particles ($A_1$) are described e.g. in US patents 3855172, 4460637, 514730, 5275867 and 5965244 and in EP-A-1043372. Several colloidal pigment particles of the kind of ($A_1$) are commercially available, e.g. in the form of hydrosols or in dry form. Among the particles ($A_1$) silica particles are preferred, especially those giving in water at a 5 % concentration a pH (according to ISO 787/9) > 7, e.g. in the range of 8 to 9.5.

The particle size of the colloidal or primary particles ($A_1$), referred to the dry form, is on average in the range of 5 to 80 nm, wherein > 99 % - preferably 100 % - of the particles are of a particle size < 100 nm; preferably the particle size of ($A_1$) is on average in the range of 8 to 50 nm,
wherein > 99 % - preferably 100 % - of the particles are of a size within the range of 1 to 90 nm, preferably 2 to 80 nm, in particular as obtainable by conventional methods, e.g. as mentioned above. The particle size may be assessed e. g. with a Multisizer according to ASTM C 690-1992.

The microporous white pigment particles ($A_2$) may be agglomerates of primary particles or even microcrystalline optionally agglomerated particles as are known or as may be produced by known methods or analogously to known methods. Aggregated or secondary particles ($A_2$) may be produced e.g. by aggregation or agglomeration of primary particles ($A_1$) or by drying of corresponding sols or gels or by burning out the organic component from an agglomerate formed by treatment of a sol of primary particles with resin-forming components (e.g. formaldehyde with urea or with melamine) with formation of microporous particles of the defined particle size. Microcrystalline optionally agglomerated particles may be produced e.g. by suitable precipitation and/or (micro)crystallisation methods. The production of microporous secondary particles of the kind of ($A_2$) is described e.g. in US patents 3417028, 3855173, 4460637, 5104730, 5275867, 5352503, 5965244, and 6511736. Several microporous pigment particles of the kind of ($A_2$) are also commercially available.

The white inorganic pigments ($A_2$) are microporous, white mineral pigment particles of an average particle size in the range of 0.5 to 25 μm, wherein > 99 % - preferably 100 % - of the particles are of a particle size within the range of 0.1 to 100 μm. The particle size may be assessed e.g. with a Multisizer according to ASTM C 690-1992. For agglomerated or secondary inorganic pigment particles ($A_2$) preferably the average particle size is within the range of 1 to 20 μm, more preferably 2 to 15 μm, preferably > 99 % - preferably 100 % - of the particles being within the range of 0.5 to 50 μm, more preferably 1 to 30 μm. Typically such secondary particles are mineral oxide particles, mainly silicon or aluminium oxides, or silicates. For microcrystalline optionally agglomerated inorganic pigment particles ($A_2$) - e.g. as obtainable by microcrystallization processes - preferably the average particle size is within the range of 0.5 to 20 μm, more preferably 1 to 15 μm, especially 1 to 12 μm, preferably > 99 % - preferably 100 % - of the particles being within the range of 0.2 to 40 μm, more preferably 0.5 to 25 μm. Typically such microcrystalline particles are mineral carbonates or sulphates, in particular crystalline forms of calcium carbonate. The porosity of ($A_2$) may be in conventional ranges, typically the micropores will on average be smaller in size than the interstitial pores. The micropores in ($A_2$), referred to the dry form, are preferably in the range of 1 to 100 nm.

The overall particle size and porosity properties of the microporous particles ($A_2$) may be defined e.g. by means of their specific surface. The specific surface (determined with $N_2$ according to ISO 5794/1-Annex D), referred to the dry form, may be e.g. > 60 $m^2/g$ and < 800 $m^2/g$. For the coating of the invention it is preferred to employ as microporous particles ($A_2$) microcrystalline particles having in the dry form a specific surface ≥ 70 $m^2/g$ preferably in the range of 70 to 400 $m^2/g$, usually 70 to 200 $m^2/g$, or aggregates having in the dry form a specific surface ≥ 200 $m^2/g$, preferably in the range of 200 to 750 $m^2/g$, more preferably > 400 $m^2/g$.

Among the mentioned pigments (A) are preferred those comprising silica, silicates, alumina and calcium carbonates. Where ($A_2$) is silica the microporous silica particles are preferably selected from precipitated silica, silica xerogel or a blend of precipitated silica and/or silica xerogel with fumed silica. When ($A_2$) is a blend of precipitated silica and/or silica xerogel with fumed silica the weight ratio of precipitated silica and/or silica xerogel to fumed silica is preferably in the range of 50/50 to 98/2, preferably 60/40 to 94/6. Among the silica particles ($A_2$) are preferred those giving in water at a 5 % concentration a pH (according to ISO 787/9) < 7, e.g. in the range of 5.5 to 6.5.

In some cases commercial forms of microcrystallized pigment particles may contain a minor proportion of dust, i.e. particles of a size below 0.2 μm or even below 0.1 μm. According to the invention ($A_2$) is employed in a form that is substantially free of such dust particles, i.e. in which the dust proportion is below 1 %, preferably below 0.1 %.

The inorganic pigment (A) may comprise a conventional dispersant or wetting agent as commercially available, on its surface, e.g. polyphosphates, in a suitable low concentration as usual e.g. < 0.5 % by weight, preferably < 0.3 % by weight. For the purpose of the invention the presence of such a surfactant is not essential and (A) may also be exempt of a dispersant or wetting agent. As mentioned above, (A) may be employed in the forms as commercially available, in particular ($A_1$) is preferably employed in the form of a concentrated aqueous sol, e.g. with a solids content in the range of 10 to 50 % by weight, ($A_2$) may be employed e.g. in the form of a concentrated aqueous slurry or dispersion, e.g. with a solids content in the range of 10 to 70 % by weight, preferably 12 to 50 % by weight, or even in dry form.

The proportion of particles ($A_1$) to ($A_2$) in the coating compositions of the invention is expediently chosen in such a range as will provide satisfactory packing density. Packing density depends on the particle size and particle size distribution. Optimum packing density will be achieved if the interstitial pores between the microporous particles ($A_2$) are optimally filled with the primary particles ($A_1$), so as to avoid an excess of primary particles, which would in part hide the microporous properties of ($A_2$), and also to avoid an excess of particles ($A_2$) over the primary colloidal particles ($A_1$), which due to the presence of not optimally filled interstitial pores might hide in part the efficiency of the colloidal primary particles ($A_1$). A way of calculating packing density is described e.g. in US patent 5965244. Optimum packing density may however also be assessed experimentally by means of a few preliminary tests. The weight ratio ($A_2$)/($A_1$) may be chosen accordingly. A suitable weight ratio ($A_2$)/($A_1$) is e.g. in the range of 95/5 to 40/60, preferably 92/8 to 50/50; where ($A_2$) are agglomerated particles, preferably 75/25 to 50/50, where ($A_2$) are microcrystallised particles, preferably 92/8 to 70/30.

The chemical nature of ($A_1$,) and ($A_2$) may be chosen as desired. Thus, according to one feature of the invention ($A_1$) and ($A_2$) may be of the same chemical kind, in particular they may be forms of a same chemical compound or of two chemically interrelated compounds, i.e. the primary particles ($A_1$) may consist e.g. of colloidal silica and the particles ($A_2$) may then consist of microporous silica particles (in particular silica particles selected from precipitated silica, silica xerogel or a blend of precipitated silica and/or silica xerogel with fumed silica), or the particles ($A_1$) may consist of colloidal calcium carbonate and the particles ($A_2$) may then consist of microporous calcium carbonate, or the primary particles ($A_1$) may consist of colloidal alumina hydrate and the secondary particles ($A_2$) may then consist of microporous alumina hydrate particles. According to another feature of the invention the colloidal particles ($A_1$) may be of a different chemical kind than the microporous particles ($A_2$), thus ($A_1$) may e.g. be colloidal silica and ($A_2$) microporous calcium carbonate or alumina hydrate particles, or the primary particles ($A_1$) may e.g. be colloidal calcium carbonate and the secondary particles ($A_2$) may e.g. then be microporous silica or alumina hydrate particles. Most preferably ($A_1$) is colloidal silica.

As binders (B) for the production of the coating compositions of the invention there may be employed binders conventional per se as adhesives in the production of coating compositions for paper, preferably non-ionic (co)polymers which are dispersible in water, e.g. self dispersible or dispersible in the presence of suitable dispersants or emulsifiers, or which are at least colloidally soluble in water.

The binders (B) may be selected e.g. from at least colloidally water soluble polymeric materials, e.g. polyvinyl alcohols derived from partial or full hydrolysis of polyvinyl acetates, silyl-modified polyvinyl alcohols, casein, soybean protein, synthetic proteins, starches, modified starches (for example enzymatically modified and/or partially hydrolyzed or/and oxidized starches), cellulose derivatives (e.g. hydroxyethyl cellulose, methyl cellulose); and water insoluble polymeric materials, for example latexes of conjugated diene copolymers (e.g. styrene/butadiene copolymers, methyl methacrylate/butadiene copolymers), latexes of (meth)acrylate/styrene copolymers (e.g. butyl acrylate/styrene copolymers, 2-methylhexyl acrylate/styrene copolymers), latexes of vinyl polymers (e.g. styrene/vinyl acetate copolymers), (co)poly(meth)acrylate based resins and resins self-dispersible in water (e.g. acrylic resins and polyurethane resins). (Co)poly(meth)acrylate based resins may optionally be silyl-modified or/and blended with a colloidal polysilane.

Preferably the binders (B) are selected from

($B_1$) non-ionic binders, which are colloidally soluble in water
and ($B_2$) emulsified latexes.

($B_1$) preferably is selected from optionally modified starches and polyvinyl alcohols. The polyvinyl alcohols usually are hydrolysis products of corresponding polyvinyl acetates and may be defined e.g. by means of the degree of polymerisation and hydrolysis of the corresponding polyvinyl acetates. The degree of polymerisation of the polyvinyl acetates may range in a broad scope, e.g. from 200 to 50000, preferably 300 to 10000, more preferably 500 to 5000. The molecular weights of the soluble binders may also be deduced from the viscosities of their aqueous solutions. The viscosity of an aqueous 4 % solution of ($B_1$), in particular of a polyvinylalcohol, preferably is in the range of 3 to 100 mPa·s, more preferably 15 to 40 mPa·s. The polyvinylalcohols are of a hydrolysis degree preferably > 50 %, more preferably in the range of 75 to 100 %, referred to their precursor polyvinyl acetates. There may be employed polyvinyl alcohols as commercially available e.g. as POVAL (a trademark of Kuraray, Japan) of various degrees of hydrolysis and polymerization, e.g. the partially hydrolysed grades POVAL 203, 205, 210, 217, 220, 224, 226 and 235, and the fully hydrolysed grades POVAL 103, 104, 105, 110, 117 and 124. In these products the first figure indicates a degree of hydrolysis in Mol-%, 1 = 98.5 % or more (= full hydrolysis), 2 = 80-90 mol-% (partial hydrolysis), and the last two figures $\times$ 100 is the degree of polymerisation. Typically there may be employed POVAL 105, POVAL 117 or POVAL 235. ($B_2$) preferably is selected from (co)poly(meth)acrylate-based resins. If desired a minor proportion e.g. up to 20 % of ($B_2$), may be cationic such as poly(γ-acrylamidopropyl-trimethyl ammonium chloride). Preferably no cationic binders (B) are employed. Among the above mentioned binders the binders ($B_1$) are preferred, especially the polyvinylalcohols.

The binder (B) may be employed in a weight proportion referred to the pigment (A) as is efficient for providing a coating of satisfactory cohesion and adhesion properties for application. Referred to 100 parts by weight of dry white pigment (A) there may be employed e.g. 1 to 100, preferably 5 to 75, more preferably 10 to 60 parts by weight of binder (B), referred to the dry form.

The suitable or optimum amount of binder (B) for a certain selected pigment (A) may vary depending on the nature of the pigment, the particle size of ($A_1$) and ($A_2$), the specific surface of ($A_2$) and the weight proportion of ($A_1$) to ($A_2$), and further on the particular kind of binder (B), on the employed components (C) and any (D), and on the foreseen substrate and desired effect, and may be assessed by a few preliminary tests.

The polymers (C) are cationic, crosslinked polymers obtainable by exhaustive reaction of at least one crosslinking at least difunctional amine (G) and optionally a monofunctional amine (H) with a chloroterminated addition product (F) of epichlorohydrin to an oligofunctional alcohol (E).

The polymers (C) are water soluble. By water soluble is meant a product that gives a clear true or colloidal solution in water at a concentration of 3 g/l, at a pH of 7 and at a temperature of 20°C. They are preferably predominantly aliphatic, more preferably fully aliphatic, disregarding the anions present as counter-ions to the ammonium groups, and contain ether oxygen atoms and ammonium groups. The heteroatoms in the polymer are preferably at a distance of 2 to 6 carbon atoms from each other.

The molar ratio of epichlorohydrin to (E), which may be indicated by m, is suitably chosen so that more than two moles of epichlorohydrin are reacted with one mole of (E).

Oligo means in general a number in the range of 2 to 10, mostly 3 to 8, preferably 3 to 6.

The oligofunctional alcohols (E) are preferably aliphatic and of low molecular weight, preferably they are oligohydroxyalkanes with molecular weight ≥ 92 and with x hydroxy groups (where x is a figure in the range of 3 to 6) or mixtures thereof with a $C_{2-4}$-alkane diol.

As oligohydroxyalkanes of molecular weight ≥ 92 there may be employed known compounds, in particular low molecular oligohydroxyalkanes preferably with 3 to 6 carbon atoms. The $C_{2-4}$-alkanediols preferably are $C_{2-4}$-monoalkyleneglycols, more preferably $C_{2-3}$-monoalkylene-glycols. Preferably (E) is ($E_1$) which is selected from an oligohydroxyalkane of the formula

$$X{-}(OH)_{x1} \qquad (1),$$

in which

X signifies the x1-valent radical of a $C_{3-6}$-alkane
and x1 signifies a number from 3 to the number of carbon atoms in X,

or a mixture of oligohydroxyalkanes of formula (I), or a mixture of one or more oligohydroxyalkanes of formula (I) with a $C_{2-3}$-alkyleneglycol.

As oligohydroxyalkanes of formula (I) there may be employed e.g. glycerol, threitol, trimethylol- ethane or -propane and reduction products of conventional carbohydrates with five or six carbon atoms, such as sorbitol, mannitol, dulcitol and pentaerythritol.

Preferred compounds of formula (I) are those of formula

$$H—(CHOH)_{x1}—H \quad (I').$$

The compounds of formula (I') with four to six carbon atoms may be employed in the form of racemic mixtures or of single optical isomers; they are solid at ambient temperature and are thus expediently employed in admixture with at the least one compound selected from glycerol, ethylene glycol and propylene glycol, which are liquid at ambient temperature. The quantitative ratio of such mixtures is chosen suitably so that the mixture is liquid at the chosen reaction temperature; preferably in the range of 1 to 4 parts by weight of compound of formula (I) with four to six carbon atoms for every part by weight of compound with two to three carbon atoms. Preferably there is employed glycerol alone or a mixture of a compound of formula (I') in which x1 is 5 or 6, with glycerol.
The molar ratio m of epichlorohydrin to oligohydroxycompound or mixture (E) is preferably in the range of 2.2 moles to 1.2·x moles, more preferably 2.5 moles to 1.1·x moles, e.g. x to 1.1·x moles, of epichlorohydrin for every mole of oligohydroxycompound or mixture (E).
The reaction of (E) with epichlorohydrin is preferably carried out in the absence of any other solvent and in the presence of a catalyst, which is e.g. a Lewis acid, preferably boron trifluoride preferably in the form of its etherate or acetic acid complex. This reaction is an addition reaction of the epichlorohydrin to a hydroxy group, with opening of the epoxy ring and formation of a 2 hydroxy-3-chloropropyl-1 radical. This reaction is exothermic and the reaction temperature is preferably kept below 100°C, more preferably in the range of 60 to 85°C, with cooling. The epichlorohydrin reacts with the available hydroxy groups of (E) and, as reaction proceeds, may also react with a hydroxy group of a 2-hydroxy-3-chloropropyl-1 radical formed during the reaction, so that some of the hydroxy groups of (E), e.g. of the compounds of formula (I), may even remain non-reacted with epichlorohydrin. Depending on the molar ratio, on the functionality of the oligohydroxycompound (e.g. the value of x or x1) and on the optical configuration of (E), e.g. of the compounds of formula (I) or (I') - especially if x1 is 4 to 6 - the degree of reaction of the OH groups of (E) with epichlorohydrin may vary, and may e.g. be in the range of 50 to 95 %, mostly 75 to 95 %, of the total number of OH groups originally present in (E).
The obtained addition product (F) is a chloro-terminated product. Referred to formula (I) it may be represented by the formula

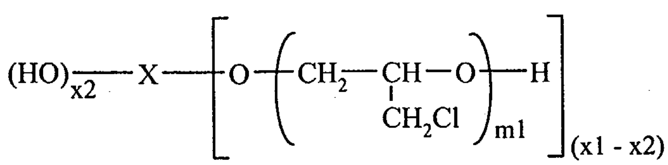

(II),

in which x2 is the number of hydroxygroups linked to X which have not reacted with epichlorohydrin in favour of a corresponding number of hydroxygroups introduced with epichlorohydrin, and the sum Σm1, which on average corresponds to (x1 - x2)·m1, equals m. As may be deduced from the above mentioned degree of reaction of the hydroxygroups of (E) with epichlorohydrin, x2 may range e.g. in the scope of 0 to 0.5·m, mostly in the scope of 0.05·m to 0.25·m. In each of the (x1 - x2) radicals of formula

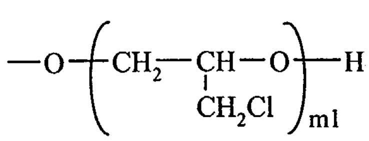

(f)

m1 may have the same or different values; mostly m1 signifies 1 or 2.
Preferably (F) is ($F_1$), i.e. a reaction product of epichlorohydrin with ($E_1$).
The so produced addition product (F) is then reacted with n moles of (G) and optionally p moles of (H) per

mole of (F) or respectively per mole of (E), to produce a crosslinked polycationic polymer (C), in which the chlorines of (F) have been exhaustively reacted with (G) and optionally (H).

By polycationic polymers is meant herein poly-ammonium polymers, i.e. polymers comprising several quaternary ammonium groups and/or protonated amine groups, at least a part of which in particular are part of the bridging crosslinking groups.

The proportion of moles of (G) and any optional (H) per mole of chlorine terminated product (F) is chosen so that exhaustive reaction of the chlorines with the crosslinking amines (G) and optionally amines (H) takes place. Since the reaction of epichlorohydrin with (E) or respectively ($E_1$) is practically quantitative, the number m represents also the number of linked terminal chlorine atoms in (F) or ($F_1$). The ratio of (G) and (H) to (F) is suitably chosen in such a range that polymeric products (C) can result and the chlorine atoms of (F) or ($F_1$) are exhaustively reacted with (G) and optionally (H). The number n of moles of (G) is suitably < m, preferably n + p < m, provided that the total number of functionalities in (G) and any optionally present (H) is ≥ m, preferably t [i.e. the total number of mole equivalents of (G) + (H) referred to total functionality of amino groups] > m. One mole equivalent of (G) being one mole of (G) divided by the number indicating its functionality, which is a number in the range of from 2 to the maximum number of reactive sites at the amino groups in (G). (H) is taken as monofunctional.

n preferably is a number > 0.2·m, e.g. a number in the range of 0.2·m to (m - 0.1), preferably 0.4·m to (m - 0.2), more preferably 0.4·m to (m - 0.5). Preferably n > 1

p is ≥ 0 and < m - n. p is e.g. 0 to 2·n. If (H) is employed, p preferably is ≥ 0.25·n, e.g. a number in the range of 0.25·n to 2·n.

As amines (G) there may be employed known amines, preferably of the following formula

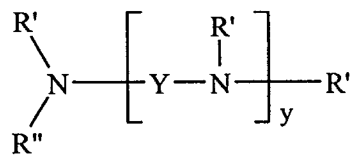

(III),

| | |
|---|---|
| in which Y | signifies $C_{2-3}$-alkylene, |
| y | signifies a number from 0 to 3, |
| and either R' | signifies independently hydrogen or $C_{1-3}$-alkyl |
| and R" | signifies hydrogen or $C_{1-3}$-alkyl, if y is 1 to 3, |
| or R' | signifies $C_{1-3}$-alkyl |
| and R" | signifies hydrogen, if y is 0, |

as a reactant leading to a crosslinking.

If the reaction of (F) with (G) is carried out under quaternising conditions, as a bifunctional amine of formula (III) with y = 0 there is preferably employed a disubstituted monoamine, i.e. in which R' is $C_{1-3}$-alkyl and R" is hydrogen, so that by the crosslinking reaction there is formed a quaternary bridging ammonium group. Analogously, if y = I R' as well as R" are suitably $C_{1-3}$-alkyl, so as to provide a bridging group with two quaternary ammonium groups. Similarly also if y is 2 or 3, R' and R" are preferably $C_{1-3}$-alkyl for providing quaternary bridging ammonium groups. If the reaction of (F) with (G) is carried out under quaternising conditions, y preferably signifies 0 or 1.

If the reaction of (F) with (G) is not carried out under quaternising conditions, as (G) there is preferably employed an oligoamine as an at least bifunctional amine, and in formula (III) y = 1 to 3. More preferably in this case the oligoamine contains at least one primary amino group and at least one further amino group is primary or secondary, i.e. in formula (III) at least three of the R' signify hydrogen, so that by the crosslinking reaction there are formed secondary and/or tertiary bridging amino goups, which are then protonated to ammonium groups.

As amino compounds of formula (III) there may be employed known amines. The $C_{1-3}$-alkyl radicals in R' and R" may be methyl, ethyl, propyl or isopropyl, the lower molecular ones being preferred, especially methyl. The index y may be any number from 0 to 3, preferably 0 to 2, more preferably for quaternary products 0 or 1 and for non-quaternary products 1 or 2. For quatemisation R' preferably signifies $C_{1-3}$-alkyl and, if y is 0, R" signifies hydrogen or, if y signifies 1 to 3, R" has the same significance as R'. For non-quaternising crosslinking R' and R" preferably signify hydrogen. Representative quaternising crosslinking amines of formula (III) are dimethylamine, tetramethylethylenediamine, tetramethylpropylenediamine, pentamethyldiethylenetriamine and hexamethyltriethylenetetramine, among which the difunctional amines, in particular the lower molecular ones, are preferred, especially dimethylamine and tetramethylethylenediamine. Representative non-quaternising crosslinking amines of formula (III) are ethylenediamine, propylenediamine, diethylenetriamine and triethylenetetramine, among which the triamines are preferred, especially

diethylenetriamine.

As amines (H) there may be employed known aliphatic mono- or oligoamines in which at least some of the amino nitrogens are substituted with an aliphatic substituent that does not interfere with the reaction, preferably low molecular alkyl, so long as it contains at most one primary or secondary amino group.

(H) preferably is

($H_1$) at least one aminocompound of formula

$$N(R''')_3 \qquad (IV)$$

or ($H_2$) at least one aminocompound of formula

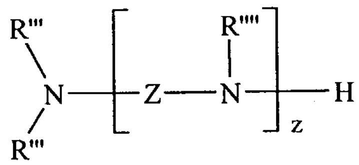

(V),

wherein Z signifies $C_{2-3}$-alkylene,
z signifies 0 or 1,
R''' signifies $C_{1-3}$-alkyl
and R'''' signifies hydrogen or $C_{1-3}$-alkyl.

The bridging alkylene Z may be ethylene, propylene-1,2 or propylene-1,3, of which ethylene and propylene-1,3 are preferred. R''' preferably stands for ethyl or methyl, most preferably methyl. R'''' preferably stands for ethyl, methyl or hydrogen, most preferably hydrogen. The index z preferably signifies 1.

For amination with (H) there may be employed a suitable secondary or tertiary monoamine, e.g. of formula (V), with z = 0, or of formula (IV), or a diamine of formula (V) with z = 1. Preferably the reaction with (H) is a quaternizing reaction with a tertiary monoamine of formula (IV) or a non-quaternizing reaction with a diamine of formula (V) with z = 1.

Representative amines of formula (IV) are trimethylamine and triethylamine. Representative amines of formula (V) are N,N-dimethylaminopropylamine, N,N-diethylaminopropylamine, and N,N-diisopropylaminopropylamine.

The polycationic products are polymers at least insofar as the reaction with the crosslinking amine leads to a polymer.

The molar ratio of crosslinking quaternizing amine (G) of formula (III) to the addition product (F) is suitably chosen so that a product of polymeric character is produced. The molar ratio of quaternizing amine [in particular quaternising amine (G) or mixture of quaternising amines (G) and (H)] to epichlorohydrin addition product (F) or ($F_1$) is preferably chosen so that for every mole-equivalent of addition product (F) or ($F_1$) (with reference to chlorine) there is employed 0.5 mole of crosslinking amine ± 30 %, e.g. ± 10 %.

The concentration of the reactants is preferably chosen in such a way that the concentration of (G) in the aqueous mixture is in the range of 10 to 75 %, preferably 20 to 70 % by weight.

The reaction of quaternizing amine with (F) is carried out preferably in aqueous medium and preferably with heating, e.g. at a temperature in the range of 50 to 100°C, preferably 60 to 90°C. During the reaction, at least at the beginning, the basicity of the amine is sufficient for the quaternizing alkylation of the amine with (F), i.e. with the chloride used as an alkylating agent. The pH of the reaction mixture is preferably in the range of 4 to 9, at the beginning being preferably in the range of 7 to 9. As reaction proceeds, the alkalinity of the mixture and the concentration of crosslinking amine diminish. If in the reaction product there is present a proportion of covalently linked chlorine which is higher than desired, there may e.g. be added a further reactant which is a monofunctional tertiary amine and/or, if the starting crosslinking reactant is a secondary monoamine, there may be added a suitable strong base, such as an alkali metal hydroxide, preferably sodium hydroxide, so that the pH is preferably maintained in the range of 7 to 9. When the reaction has completed or has reached the desired degree, the reaction mixture is suitably acidified by addition of a conventional acid, preferably a mineral acid (such as hydrochloric acid, sulphuric acid or phosphoric acid) or a low molecular aliphatic carboxylic acid e.g. with 1 to 6 carbon atoms (such as formic acid, acetic acid, citric acid or lactic acid), preferably to reach a pH below 7, more preferably in the range of 4 to 7, most preferably in the range of 5 to 6.5. The progress of the reaction may be followed by checking the viscosity of the reaction mixture, which gives an empirical impression of the degree of crosslinking, i.e. quaternization. A suitable viscosity is e.g. in the range of 200 to 3000 cP.

The non-quaternising reaction of (G) and any (H) with (F) is carried out suitably in aqueous medium, e.g. at a water content in the range of 40 to 90 %, preferably 50 to 88 %, referred to the total weight of the aqueous reaction mixture, and preferably with heating, e.g. at a temperature in the range of 30 to 90°C, preferably 40 to 70°C. During the reaction the basicity of the amines (G) and, if present, also (H) may be sufficient for the alkylation of (G) and respectively (H) with the chloride (F) used as an alkylating agent, if desired there may even be employed a strong base, e.g. potassium hydroxide or preferably sodium hydroxide. The pH of the reaction mixture is preferably in the range of 7 to 10. (H) may be added e.g. simultaneously with (G) or even subsequently to (G). If in the reaction there has been employed a proportion of (G) which alone is insufficient for reacting with all covalently linked chlorine the required amount of compound (H) may be added to complete the reaction of (F). When the reaction has completed or has reached the desired degree, the reaction mixture is suitably acidified by addition of a conventional acid, preferably a mineral acid (such as hydrochloric acid, sulphuric acid or phosphoric acid) or a low molecular aliphatic carboxylic acid e.g. with 1 to 6 carbon atoms (such as formic acid, acetic acid, citric acid or lactic acid), preferably to reach a pH below 6, more preferably in the range of 3.5 to 5.5, most preferably 4 to 4.5. The proceeding of the reaction may be pursued by checking the viscosity of the reaction mixture, which gives an empirical impression of the degree of polymerization and crosslinking. A suitable viscosity is e.g. ≤ 5000 cP, preferably in the range of 200 to 3000 cP.

Depending on the ratios of (G) to (F) and (H) to (F) - in addition to the suitable choice of the reaction conditions - there may be produced crosslinked polymeric etherammonium salts (C) of a broad range of degrees of polymerisation and of crosslinking and, referred to the quaternary or protonated form, also of a broad range of cationicities. Their cationicity - which may be assessed e.g. by means of a charge analyser or by other suitable methods - is e.g. in the range of 2 to 10, preferably 3 to 8 meq/g at pH 4.

The polycationic polymers (C) are salts in which the counter-ions to the ammonium groups may be any anions as may result from the involved reactions or/and by pH-adjustment, e.g. anions of mineral acids (e.g. chloride, sulphate or phosphate ions) or of low molecular aliphatic carboxylic acids (e.g. with 1-6 carbon atoms such as formate, acetate, lactate or citrate ions), or may be replaced by other ions e.g. by ion exchange or other conventional techniques.

Preferably (C) are

($C_1$) crosslinked polycationic polyquaternary polymers obtained by quaternizing reaction of ($F_1$) with with quaternizing amines (G) and optionally (H),

($C_2$) crosslinked polycationic polymers obtained by non-quaternizing reaction of ($F_1$) with amines (G) and optionally (H),

Among the polymers ($C_2$) are preferred polymeric, crosslinked, protonated etheramines (C) in which $p < 0.25 \cdot n$, e.g. even $p = 0$, especially

($C_{2A}$) in which n is a number in the range of from $0.4 \cdot m$ to $0.72 \cdot m$,

and ($C_{2B}$) in which n is a number in the range of from $0.72 \cdot m$ to $(m - 0.2)$.

Among the above are preferred ($C_1$) and ($C_{2A}$), especially ($C_1$).

According to one feature of the process, the reaction conditions are preferably chosen in such a way that (G) is sufficient for complete reaction with all the available terminal chlorine of (F) or ($F_1$), and no (H) is required, especially where (G) is a quaternising crosslinking amine of formula (III).

The obtained polycationic polymers (C) may schematically be represented, at least for the derivatives of compounds of formula (II), by the following average formula:

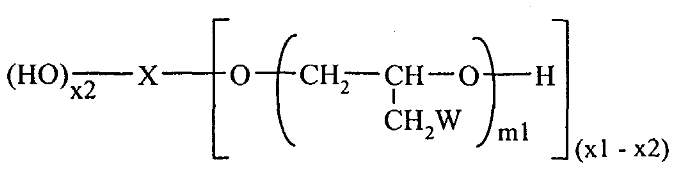

(VI),

wherein each W independently signifies the radical derived from (G) or respectively (H), at least two being (G)-derived, and two or more (G)-derived symbols W of a same molecule or of two or more different molecules form together a bridge formed by the polymerization and cross-linking reaction of (G).

The so produced (C)-containing compositions may be directly employed for the production of (P) or may, if desired, be adjusted in (C)-content by dilution with water or evaporation or be desalinated and optionally concentrated by membrane filtration through a semipermeable membrane.

The concentration of (C) in the aqueous composition as produced is preferably in the range of 10 to 60 % by weight, more preferably 12 to 50 % by weight. The pH of the solution of (C) may range broadly, e.g. from the weakly acidic to weakly basic range, in particular from pH 4.5 to pH 8, preferably pH 5.5 to pH 7.5.

If desired the produced aqueous (C)-containing compositions - optionally after conversion of non-quaternary salt form to a basic form by suitable neutralization with a base (e.g. by addition of sodium hydroxide or potassium hydroxide) - may be dried to powders or granular products. Preferably, however, they are employed directly in the form of the produced aqueous concentrate compositions. If desired (C) may also be employed in admixture with another cationic polymer, especially with a cationic starch, e.g. in the weight ratio of the latter to (C) of up to 20 %. Preferably however (C) is not combined with any other cationic polymers.

The weight ratio of (C) to (A) may be range in a broad scope, preferably below 50/100. Advantageously the weight ratio (C)/(A) is in the range of 0.5/100 to 30/100, preferably 2/100 to 20/100. Depending on the particular constitution of (C) and on the particular kind and proportion of the other components present, in particular of (A) and (B), there may be chosen a proportion more suitable or optimum for a particular envisaged quality of coating - in particular ink-jet recording coating - and may be determined by means of a few preliminary tests.

As formulation additives (D) there may be employed additives as may have an influence on the stability or physical form of the aqueous composition or also additives that may have an additional effect in application, particularly on the coatings, in particular known substances. The formulation additives (D) may thus e.g. be selected from

($D_1$) agents for influencing the optical aspect of the coating, mainly ($D_1$') optical brighteners or ($D_1$") dyes,
($D_2$) agents for improving the stability against micro-organisms, in particular additives for combating the harmful activity of micro-organisms,
($D_3$) additives having an influence on the salt form, in particular electrolytes for pH-adjustment,
($D_4$) agents influencing the physical form of the composition, e.g. on storage as well as on application, in particular e.g. defoamers, thickeners, flow agents,
($D_5$) additives for influencing the use properties of the coated substrate, e.g. image fading preventing agents, anti-curling agents, softeners, tear strength additives, antistatic agents, flame retardants
and ($D_6$) stabilisers against deterioration by ambient oxygen and/or UV radiation, in particular antioxidants, UV-absorbers.

If desired, ($D_1$') - which suitably are water soluble, preferably anionic optical brighteners - may be employed in a form combined with a defined proportion of ($C_1$) prior to its use for the production of (P).

As ($D_1$') there may be employed any cationic or preferably anionic optical brightener that is water soluble, the cationic in protonated or quaternary salt form and the anionic in the form of its alkali metal salt. As ($D_1$') there may in particular be employed anionic optical brighteners suitable for the optical brightening of paper, advantageously containing 2 to 10 anionic groups, preferably 4 to 10 anionic groups, the anionic groups being preferably sulphonate groups and/or carboxylate groups, e.g. 2 to 8, more preferably 4 to 6, sulphonate groups and optionally 2 to 4 carboxylate groups. Anionic optical brighteners, especially those suitable for the optical brightening of paper, are well known in the art and also described in the specialised literature. Suitable categories of optical brighteners are those of the diaminostilbene, bisstilbyl (also referred to as bis styryl biphenyl) or 1,3-diphenylpyrazoline series, among which those of the bis(triazinylamino)stilbene disulphonic acid series are preferred, especially those of the general formula

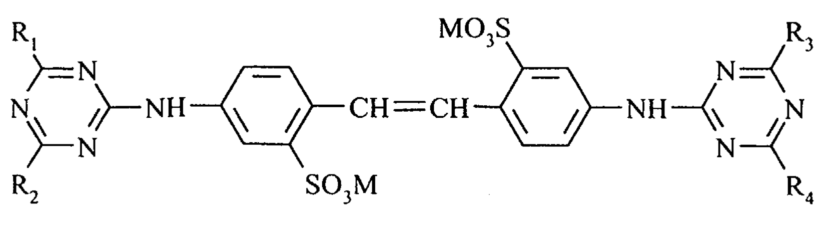

( VII ),

wherein

| | |
|---|---|
| $R_1$, $R_2$, $R_3$ and $R_4$ | signify, independently from each other, the radical of an amine or of an alcohol |
| and M | signifies hydrogen or an alkali metal cation. |

In the significances of $R_1$, $R_2$, $R_3$ and $R_4$ the radical of an alcohol is preferably the radical of an aliphatic alcohol or of a phenol. The radical of the aliphatic alcohol is preferably $C_{1-4}$-alkoxy, the phenol radical is preferably

unsubstituted phenoxy. The amine radical is preferably optionally substituted anilino or an aliphatic or araliphatic aminogroup $-NR_0'R_0''$,
wherein

| | |
|---|---|
| $R_0'$ | signifies hydrogen, $C_{1-4}$-alkyl, benzyl, $C_{2-3}$-hydroxyalkyl or carboxy-($C_{1-4}$-alkyl), |
| $R_0''$ | signifies hydrogen, $C_{1-4}$-alkyl, $C_{2-3}$-hydroxyalkyl, sulpho-$C_{1-3}$-alkyl, sulpho- -$C_{3-4}$-hydroxyalkyl, cyano-($C_{1-3}$-alkyl), carbamoyl-($C_{1-3}$-alkyl), carboxy-($C_{1-4}$-alkyl), carboxy-[cyano-($C_{2-3}$-alkyl)], carboxy-[carbamoyl-($C_{2-3}$-alkyl)] or dicarboxy--($C_{2-3}$-alkyl), |
| or $R_0'$ and $R_0''$ | together with the nitrogen to which they are linked form a heterocycle. |

$R_1$ and $R_3$ preferably signify an optionally substituted anilino group of formula

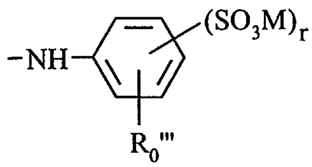

(a),

wherein $R_0'''$ signifies hydrogen, methyl, methoxy or chlorine, preferably hydrogen, and r signifies 0, 1 or 2, preferably 1 or 2, or an aliphatic aminogroup $-NR_0'R_0''$.

$R_0'$ preferably signifies hydrogen, $C_{1-2}$-alkyl, benzyl, $C_{2-3}$-hydroxyalkyl or carboxy-($C_{1-2}$-alkyl).

$R_0''$ preferably signifies $C_{2-3}$-hydroxyalkyl, carbamoyl-($C_{1-3}$-alkyl), cyano-($C_{1-3}$-alkyl), carboxy--($C_{1-2}$-alkyl) or dicarboxy-($C_{2-3}$-alkyl).

If $R_0'$ and $R_0''$ together with the nitrogen to which they are linked form a heterocycle, this is preferably a morpholine ring or a carboxypyrrolidine ring, Preferably $NR_0'R_0''$ is aliphatic and more preferably contains one or more carboxy groups, most preferably two carboxy groups, e.g. preferably $R_0'$ and $R_0''$ signify both carboxy-($C_{1-2}$-alkyl) or $R_0'$ signifies hydrogen and $R_0''$ signifies dicarboxy-($C_{2-3}$-alkyl).

$R_2$ and $R_4$ preferably signify methoxy, phenoxy or more preferably an aminogroup $-NR_0'R_0''$.

The two symbols $R_1$ and $R_3$ in formula (VII) may have the same significance or different significances. Preferably they have the same significance. More preferably they signify a radical of formula (a).

Similarly also the two symbols $R_2$ and $R_4$ in formula (VII) may have the same significance or different significances. Preferably they have the same significance.

The above optical brighteners are known or may be produced by known methods analogously to known brighteners. Ariionic optical brighteners of the diaminostilbene and bisstilbyl series are described e.g. in US patent 4888128, anionic optical brighteners of the 1,3-diphenylpyrazoline series are described e.g. in Rev. Prog. Coloration, Vol 17, 1987, pages 46-47. Optical brighteners of the bistriazinylaminostilbene disulphonic acid series, in particular of formula (VII), are described e.g. in WO 96/00221 A1, 99/67317 A1 and 01/46323 A1, in GB-A 1239276, 1313469 and 1471193 and in Japanese Kokais JA 62-106965 A2 and JA 63-282382 A2. Among the above optical brighteners are preferred those of formula (VII), e.g. with 2 to 10 sulpho groups, in particular those containing 2 to 8, preferably 4 to 6, $-SO_3M$ groups, e.g. those described in WO 96/00221 A1, 99/67317 A1 and 01/46323 A1.

M in formula (VII) is preferably an alkali metal cation or hydrogen, in particular lithium, sodium and/or potassium or any combination.

The optical brighteners ($D_1'$) may be employed in any form as commercially available, e.g. as powders or granules, which may be dissolved in water before combination with ($C_1$) or, with particular advantage, they may be employed in the form of an aqueous solution directly from production.

According to a particular feature of the invention ($D_1'$) and a suitable proportion of ($C_1$) - e.g. 0.1 to 90 %, preferably 1 to 80 % of (C) - are employed in a form in which ($D_1'$) is combined with ($C_1$) during its production, prior to completion of the polymerisation and/or crosslinking reaction.

The produced polymer ($C_1$), if desired in admixture with another cationic polymer, especially with a cationic starch, e.g. in the weight ratio of the latter to ($C_1$) of up to 20 %, expediently in the form of an aqueous solution, may be combined with a solution of ($D_1'$). Preferably however neither ($C_1$) nor ($C_2$) is combined with any other cationic polymers. According to one feature of this process, for preliminary combination of ($D_1'$) with ($C_1$), the aqueous solution of ($D_1'$) is added to the aqueous solution of the established proportion of ($C_1$), preferably stepwise and with heating, e.g. at temperatures in the range of 40°C to the boil, preferably 40 to 90°C. According to a preferred feature of this process variant, at least a part of the optical brightener ($D_1'$) - expediently in the form of its aqueous solution - is added before the crosslinking reaction has completed and any remaining portion of the solution of ($D_1'$) is added during the

crosslinking reaction, so that there is obtained an aqueous composition in which the optical brightener anions are the counter-ions to a part of the cations of ($C_1$), and ($D_1$') is also entrained by (or entangled with) ($C_1$). The pH is chosen suitably in such a way that salt-formation of ($C_1$) with ($D_1$') is favoured, expediently in the weakly acidic to distinctly alkaline range, preferably at a pH in the range of 5 to 10, more preferably 5.5 to 9. The ratio of ($D_1$') to ($C_1$) or to its precursor may be chosen in such a way that the obtained product is of cationic character, which means that the overall cationic charge due to the cations of ($C_1$) exceeds the anionic charges introduced with ($D_1$'), or preferably the number of cations, in particular of quaternary cations, in ($C_1$) is larger than the number of anions introduced with ($D_1$'). The ratio of total anionic groups introduced with ($D_1$') to the total quaternary ammonium groups in ($C_1$) is e.g. in the range of 2/100 to 60/100. The weight ratio of ($D_1$') to ($C_1$) is chosen accordingly in a suitable way, e.g. in the range of 1/100 to 40/100; the weight ratio of ($D_1$') to a suitable precursor of ($C_1$) is chosen accordingly. The cationicity of the combined product ($C_{DI}$'), i.e. the amount of quaternary ammonium groups not engaged with ($D_1$'), expressed in milliequivalents per gram of ($C_{DI}$'), is inferior, preferably by at least 0.1 meq/g, to the one of ($C_1$) and is e.g. in the range of 0.1 to 1.2 meq/g, preferably 0.2 to 1 meq/g, more preferably 0.45 to 0.85 meq/g, at pH 7. The cationicity may be assessed e.g. by means of a "Charge Analyser" fitted with a photoelectric cell, by titration of a 0.1 weight-% ($C_{DI}$')-solution with a polyvinyl potassium sulphate solution (e.g. 0.00052N), using Toluidine Blue as an indicator (from blue = cationic to pink = anionic), at pH 4, 7 and 9 (adjusted by means of hydrochloric acid or potassium hydroxide solution). Such ($D_1$')-containing polymers are described e.g. in WO 99/67317 A1. ($D_1$') may also be be admixed with ($C_1$) when preparing (P).

Where ($D_1$') is employed, the proportion thereof to the total of (C) present is suitably chosen in such a range that the overall combination of (C) with ($D_1$') is distinctly cationic.

As ($D_1$") there may be employed any preferably water soluble dyes, e.g. cationic or basic dyes or anionic dyes, mainly direct dyes, e.g. for providing pastel-coloured coatings. Mostly no dyes are used in (P).

For combating the harmful activity of microorganirms there may be used conventional agents ($D_2$), mainly bacterial growth hemming agents or/and biocides mainly fungicides. There may be used commercially available products which may be used in the recommended concentrations, e.g. in a concentration of 0.001 to 0.1 % by weight of active substance referred to the aqueous composition (P).

The pH of the coating composition (P) may range broadly, e.g. from the weakly acidic to distinctly basic range, in particular from pH 4 to pH 10, preferably pH 5 to pH 9.5. The pH of (P) may if desired be optimized depending e.g. on its composition and on its intended use, i.e. in particular on the kind of substrate and desired effect. An optimum pH for a defined composition and use may be assessed by means of a few preliminary tests. If a pH adjustment is undertaken, this may be done by addition of known acids (e.g. a mineral acid, such as hydrochloric, sulphuric or phosphoric acid, or a low molecular aliphatic carboxylic acid, e.g. $C_{1-6}$-carboxylic acid such as formic acid, acetic acid, lactic acid or citric acid), bases (e.g. sodium or ptassium hydroxide or carbonate or calcium hydroxide) or buffer salts (e.g. water soluble basic aluminium salts, or alkali metal mono- and/or dihydrogen phosphate, in particular sodium or/and potassium mono- and/or dihydrogen phosphate). Mostly, the suitable pH may already result from the composition of the employed components (A), (B) and (C), so that a separate pH-adjustment may even be avoided, i.e. so that a separate addition of ($D_3$) will not be necessary.

As ($D_4$) there may be used known products, in particular defoamers, thickeners, flow agents, as commercially available, and which may be used in the recommended concentrations, e.g. in a concentration of 0.001 to 0.2 % by weight referred to the aqueous composition (P). Preferably no thickeners and no flow agents are added. The desirability of any addition of a defoamer may depend on the particular composition of (P), especially on the kind of binder (B) - in particular if a foam generating surfactant is present, e.g. if a binder of the kind of ($B_2$) comprises a foam generating surfactant - and on the kind of mineral pigment (A). Preferably no defoamer ($D_4$) is employed, especially if (A) comprises silica or/and a silicate, and/or if (B) is ($B_1$), preferably a polyvinylalcohol.

As ($D_5$) there may be employed known products, in particular additives known in the art and commercially available. As ($D_5$) there may be employed e.g. polyethylene glycols mainly as anti curling agents, and/or aldehydes or aldehyde-derived resins mainly as tear resistance additives, such as e.g. dialdehydes or melamine/formaldehyde resins. As flame retardants there may e.g. be employed ammonium polyphosphates, e.g. those described in WO-A-02/044470. Typically as ($D_5$) there may be employed polyethylene glycols in particular of an average molecular weight in the range of 1500 to 8000, e.g. in a quantitative ratio of 1 to 10 % referred to binder (B). Preferably no resin ($D_5$) is added.

As ($D_6$) there may be employed known UV-absorbers or/and anti-oxidants as may be desired e.g. depending on the selected binders (B) and/or any polymeric other additives that may be sensitive to oxygen or/and UV-light exposure, especially where (B) is ($B_2$) or/and if a formaldehyde-derived resin is used as ($D_5$) e.g. as a tear-strength additive. With the preferred binders ($B_1$), in particular if as ($B_1$) there are employed polyvinylalcohols, preferably no ($D_6$) is added.

The coating compositions (P) may preferably be produced by mixing an aqueous composition of binder (B) - in particular an aqueous at least colloidal solution of ($B_1$) or an aqueous emulsion of latex ($B_2$) - with the white mineral pigment particles (A) - in particular by admixing sequentially first ($A_2$) and then ($A_1$) - to produce an aqueous slurry or

dispersion of (A) and (B), and adding an aqueous solution of (C). If the coating composition (P) is to contain also one or more components (D), these may be added in combination with (C) and/or separately, as required or desired.

This process may prferably be carried out by first pouring ($A_2$) into the aqueous composition of (B) with stirring and when ($A_2$) has uniformly distributed in the aqueous composition, pouring also ($A_1$), preferably in the form of hydrosol e.g. of 10-50 % concentration, into it and continuing stirring until also ($A_1$) has uniformly distributed in the aqueous composition and then adding an aqueous solution of (C) with stirring. If one or more components (D) are also to be added, this may be done together with (C) or separately, in particular after admixing of (C). A component ($D_1$') may be added together with (C) e.g. as a preformed combination or mixture, or subsequently; ($D_1$") is preferably added subsequently. ($D_1$) is preferably added in the form of an aqueous concentrated solution, e.g. of 5-70 %, preferably 10-60 % ($D_1$)-content. ($D_2$) is preferably added after the other components. ($D_3$), ($D_4$) and/or ($D_6$) may be added e.g. together with or after the addition of (C). ($D_5$) is preferably added last, if desired even just before use of (P). These mixing procedures may be carried out in a very simple way in comventional mixers, suitably without heating, e.g. at a temperature in the range of 15-25°C.

The dry substance content of the aqueous coating compositions (P) of the invention may range in a broad scope, as suitable or desired for the foreseen application, e.g. in the range of 2 to 40 % by weight, preferably 5 to 30 % by weight, more preferably 8 to 20 % by weight. The water content of the employed mixture components, mainly of the aqueous binder (B) and of the aqueous solution of (C), and optionally of any component (D) which may be added in the form of a conventional aqueous preparation, may expediently be chosen so as to match nearly or exactly the desired final concentration of (P) and where required, some further water may then be added to adjust the water content. The viscosity of the compositions (P) may range broadly, e.g. up to 2000 mPa·s, at 20°C. Preferably their viscosity at 20°C is in the range of 100 to 1000 mPa·s, more preferably 200 to 800 mPa·s.

The so produced aqueous coating compositions (P) are ready for use.

The compositions (P) of the invention are distinguished by their outstanding stability, in particular stability to storage and also transportation, as may be desired for application. The coating compositions (P) may in particular be prepared, e.g. in a paper coating factory or in a plastic film or foil coating factory, in a quantity as required for a one day's work and then be stored for the whole day, to be used for feeding the employed coating assembly or machine as required. They may also be transported in the vessels in which they have been stored or even be transferred by pumping through suitable pipes to the required site for further use without suffering any damage in their composition and form.

They may be applied to any suitable support as conventionally employed for coating to produce a jet-ink recording substrate, in particular on a base paper or a corona-treated plastic film or foil, and the invention thus further provides a process for the production of a jet-ink recording substrate ($J_S$), wherein a suitable support (S), preferably a base paper ($S_1$) or a corona-treated plastic film or foil ($S_2$), is coated with an aqueous, white mineral pigment-based coating composition (P) and dried. The so produced coating constitutes a jet-ink receptive or jet-ink absorbing layer.

As a paper support ($S_1$) for the coating compositions there may be used any kinds of base paper as usually employed for coating, namely from the finest onion-skin paper up to heavy paper board, and which may in general be produced from a large choice of cellulosic fibrous material, e.g. from wood fibres, mainly in the form of mechanical pulp, chemical pulp or regenerated pulp, annual plants, rags (of linen, hemp, cotton, jute etc.), reclaimed paper or recycled optionally deinked paper. The paper to be coated may be unsized or sized. Occasionally also synthetic paper may be used as a support. Preferably there is used as a support ($S_1$) a base paper, which may be any raw paper or a sized paper as conventionally employed as a support for jet-ink recording coatings, as suitable for a jet-ink recording paper for use in conventional hard copying or printing machines, mainly printers, telefax receiving machines and copying machines in which the printed image is produced by means of jet-ink printing, usually of a square metre weight in the range of 30 to 200 g/$m^2$, preferably 40 to 120 g/$m^2$, more preferably 50 to 100 g/$m^2$.

As a plastic film or foil ($S_2$) used as a support for the coating of the invention there may be employed any conventional thermoplastic resin materials in sheet form, in particular in the form of foils or films. Such synthetic resin thermoplastic resin support may be e.g. films or foils of polyester (e.g. of terephthalic acid and ethylene glycol), polystyrene, polyvinyl chloride, polyvinyl alcohol, polymethylmethacrylate, cellulose acetate, polyethylene, and polycarbonate. It may be either transparent, i.e. with no opacifying dispersed pigment particles or gaseous microbubbles, or it may be opacified with a white pigment such as e.g. titanium dioxide, calcium sulphate, calcium carbonate, silica, clay, talc and zinc oxide or with dispersed air microbubbles (in the form of a thermoplastic microfoam). The thickness of the film or foil ($S_2$) may be as conventional for a support for a jet-ink recording coating, e.g. in the range of 10 to 300 µm. Suitably the synthetic film or foil is corona treated before coating. If desired, an adhesive layer - e.g. of the kind of (B) or a polyurethane- or alkyd resin-based adhesive, preferably (B) - may be applied, e.g. in an application weight of 0.1 to 10 g/$m^2$ referred to dry substance, on the plastic film or foil before coating in order to improve adhesion between the plastic support ($S_2$) and the ink receptive layer.

The coating compositions (P) may be applied on the support (S) by known methods with known apparatus (e.g. with a rod, with brushes, with a blade or with an air knife, or even in a size press). The coating may be carried

out in a discontinuous or continuous way, in particular during the continuous high-speed production of paper. The coating compositions (P) of the invention may be applied to the support in a coating weight as will provide an efficient substrate for jet-ink recording, e.g. at a coating weight in the range of 1 to 100 g/$m^2$, preferably 3 to 50 g/$m^2$, more preferably 8 to 15 g/$m^2$, referred to dry substance. The coating may be applied in one sole application or, if desired, even in two or more sequential applications either after drying of the previous coat or even wet on wet. Preferably the coating with (P) is applied in only one coating application and is then dried.

The fixation of the coating may take place in a manner conventional per se, suitably by heating, preferably during the normal drying step, e.g. at a temperature in the range between 50 and 120°C, preferably between 65 and 120°C, more preferably between 80 and 110°C, e.g. > 100°C.

If desired, the coated substrate may be subjected to the pressure of a drying press or of a smoothing press or calendered (e.g. in conventional calenders or supercalenders). Since however the action of the high pressure acting in these systems may have an adverse effect on the porosity of the coating, especially with a view to the interstitial pores and to the distribution of the primary particles, it is preferred not to subject the coated substrate to such high pressures, but the coated and dried substrate ($J_S$) may - optionally after completing the drying just by passing through a drying press or drying cylinders - directly be forwarded to finishing (rolling-up or cutting to the required sheet size, packaging for shipment and sale) and use.

According to a particular feature of the invention the coated substrate ($J_S$) may, before drying and/or finishing, be top-coated with a further coating composition ($P_G$), which provides a coated substrate ($J_{SG}$) in which the top coating is jet-ink permeable and is in particular of a high gloss. Coating compositions ($P_G$) providing glossy coatings typically contain colloidal pigments of the type of ($A_1$) and binders ($B_S$) of the kind of (B) containing incorporated silicon components, which mostly are copolymers of ethylenically unsaturated monomers (mainly vinylic monomers, such as vinyl acetate, vinyl pyrrolidone, styrene, or/and other unsaturated monomers such as acrylic or methacrylic esters - polyvinylacetate being at least in part hydrolysed to polyvinylalcohol), in which a minor proportion of the comonomers contains a silyl or alkoxysilyl substituent or where a minor proportion of the hydroxy groups of PVA is substituted with an alkoxysilyl group in particular with trialkoxysilyl, and which optionally may be in the form of a hydrosol. This kind of binders and corresponding glossy top coatings are described e.g. in WO-A-02/74549, WO-A-00/74945, WO-A-00/23533 and EP-A-1048479. The colloidal pigments ($A_1$) may be of the same kind and in the same proportion as described above for (P), the pigments ($A_1$) of (P) and those in ($P_G$) may be the same or may even be different from each other. According to a particularly preferred feature the pigments in ($P_G$) are silica-based or silicate-based pigments as mentioned above. The coating compositions ($P_G$) may optionally also contain components (D), in particular one or more of ($D_2$) to ($D_6$), preferably in the proportions mentioned above for (P). The glossy coating compositions ($P_G$) may be applied to the surface of the previous coating by methods conventional per se, in particular from a release support, preferably from a specular surface release drum. In this the coating compositions ($P_G$) may be applied to the release support and then transferred to the substrate coated with (P) before, during or after drying of (P) or ($P_G$). Expediently either (P) or ($P_G$) is not yet completely dried. According to one way of working ($P_G$) is applied to the specular casting surface of the release support, which is heated, and the top coat is transferred from the release support to the coated substrate while heating. In order to avoid a faulty or incomplete release, ($P_G$) may advantageously also contain a release agent such as a wax, an amide of a high molecular fatty acid (e.g. with 12 to 30 carbon atoms in the fatty acid radical) or a metal salt (e.g. a calcium, magnesium, sodium or potassium salt) of such a fatty acid. Further, in order to improve adhesion of the glossy top coat to the previous coat, a gelatinising additive, in particular a crosslinking agent capable of reacting with the binders (B) and ($B_S$) - e.g. a dialdehyde - may be added in ($P_G$) or (P) or in both. A release agent may e.g. be present in ($P_G$) in a concentration of 0.1 to 25 % preferably 0.5 to 10 % referred to dry substance content of ($P_G$). A gelatinising agent may e.g. be present in a concentration of 0.5 to 50 %, preferably 1 to 20 % referred to dry binder. In the top coat ($P_G$) the proportion of binder ($B_S$) present is preferably higher than in (P), and is e.g. 1.5 to 2.5 times the quantity of (B) in (P). The release support, in particular of the casting specular surface is preferably heated to a temperature in the range of 50 to 200°C, preferably 70 to 160°C, for releasing and drying.

The so produced coated substrates ($J_S$), optionally top-coated with ($P_G$) to ($J_{SG}$), are eminently suitable as substrates for printing, in particular jet-ink printing, e.g. with conventional jet-inks and in conventional jet-ink recording printing machines, such as printers, facsimile receiving machines and copying machines of various working systems and qualities, as commercially available. They are in particular suitable for any black or multicolour printers and even for jet-ink printers of highest resolution and/or speed.

According to the invention there may be obtained coatings of high quality, in particular brightness, opacity, surface, fastnesses (e.g. light fastness, fastness to water or to rubbing), whiteness and stability to aging, and on which there may be produced, even with hard copy systems of high resolution (e.g. ≥ 1200 dpi and/or ≥ 141 lpi) jet-ink prints of outstanding quality, be it in black, in monocolour or in particular in multicolour, especially as for print quality - e.g. with a view to sharpness, feathering, bleeding (typically black on yellow), mottling and showing through - the print being highly independent from the particular employed jet-ink and/or hard copy system.

In the following Examples parts and percentages are by weight, if not otherwise indicated; parts by weight

relate to parts by volume as grams to milliliters; the temperatures are indicated in degrees Celsius. The Jet Ink Printing Examples are carried out at maximum resolution.

Production of polycationic crosslinked polymers (C)

Example 1

109.2 parts of sorbitol are mixed with 55.2 parts of glycerol and heated to 100°C to form a solution. One part of boron trifluoride etherate is added and the mixture is stirred and cooled to 70°C. 333 parts of epichlorohydrin are added dropwise over one hour at 70-80°C with cooling. The reaction mixture is cooled to 20°C and 135 parts of an aqueous 60 % dimethylamine solution are added and the reaction mixture is heated slowly to 90°C and held for one hour. The reaction mixture is than cooled to 50°C and 150 parts of 30 % sodium hydroxide and 100 parts of water are added. The mixture is held at 50 - 60°C and the mixture slowly thickens as it polymerises. During this time extra water is added (275 parts) as the viscosity increases. Finally when the reaction mixture reaches the viscosity of 1000 cP the reaction is stopped by the addition of 20 parts of formic acid to give a pH of 4.

Example 2

The procedure described in Example 1 is repeated, with the difference that 81.6 parts of pentaerythritol are used in place of 109.2 parts of sorbitol.

Example 3

The procedure described in Example 1 is repeated, with the difference that 37.2 parts of ethylene glycol are employed instead of 55.2 parts of glycerol.

Example 4

The procedure described in Example 1 is repeated, with the difference that 208.8 parts of tetramethylethylenediamine are employed instead of 135 parts of dimethylamine.

Example 5

The procedure described in Example 1 is repeated, with the difference that 110.4 parts of glycerol are employed instead of the mixture of 109.2 parts of sorbitol and 55.2 parts of glycerol.

Example 6

92 parts of glycerol are heated to 80°C. 0.1 part of boron trifluoride acetic acid complex are added and 277.5 parts of epichlorohydrin are added dropwise over one hour at 80°C with cooling. When the addition is complete the reaction mixture is cooled to 20°C. 80 parts of water are added to 100 parts of the produced chlorohydrin. The mixture is stirred and 50.7 parts of diethylenetriamine are added slowly over 2 hours keeping the temperature at 50°C. The reaction mixture is then warmed to 60°C and held at this temperature for two hours, and the mixture slowly thickens as it polymerises. The mixture is then diluted with 235.6 parts of water and heated back to 60°C. It is maintained for about one further hour at this temperature and 100 parts of water are then added. The mixture is held for a further hour at 60°C and then 151.2 parts of water are added and the mixture is held at 60°C for about 1 hour, until a viscosity of 500 - 1500 cP at 20°C is achieved. 36 parts of aqueous 85 % formic acid are then added and the product is cooled to ambient temperature to give 753.5 parts of product with 20 % active substance content. The product is a clear pale yellow viscous liquid of pH 4. The measured cationic charge is 3.9 meq/g referred to the dry substance, at pH 4.

Production of combinations ($C_{DI}$') of optical brighteners ($D_1$') with polycationic polyquaternary crosslinked polymers ($C_1$)

Example 7

109.2 parts of sorbitol are mixed with 55.2 parts of glycerol and heated to 100°C to form a solution. One part of boron trifluoride etherate is added and the mixture is stirred and cooled to 70°C. 333 parts of epichlorohydrin are added dropwise over one hour at 70-80°C with cooling. The reaction mixture is cooled to 20°C and 135 parts of an aqueous 60 % dimethylamine solution are added and the reaction mixture is heated slowly to 90°C and held for one

hour. The reaction mixture is then cooled to 50°C and 150 parts of 30 % sodium hydroxide and 100 parts of a 18.4 % aqueous solution of the sodium salt of the optical brightener of formula

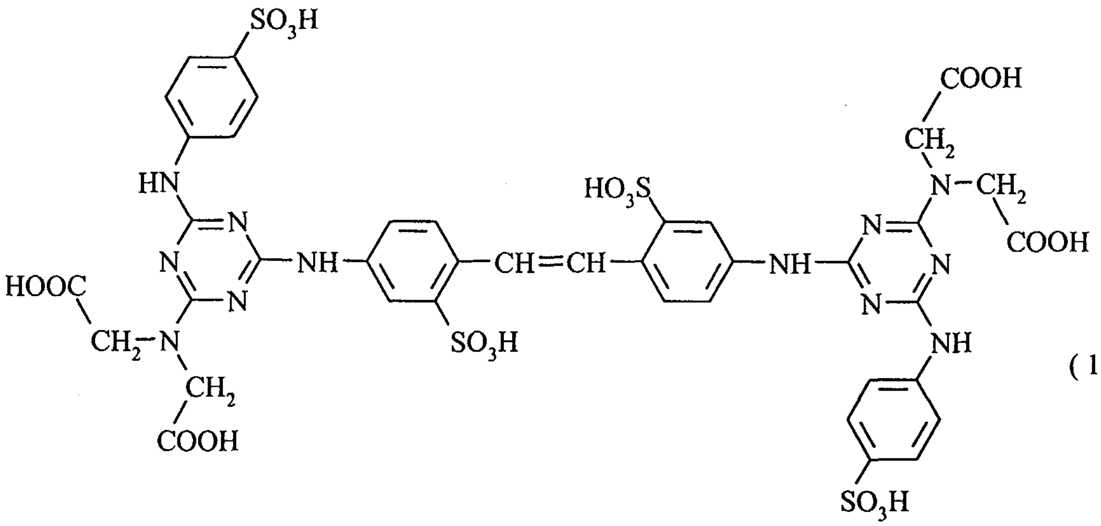

(1)

are added. The mixture is held at 50 - 60°C and the mixture slowly thickens as it polymerises. During this time further 680 parts of the 18.4 % brightener solution are added as the viscosity increases. Finally when the reaction mixture reaches the viscosity of 1000 cP the reaction is stopped by the addition of 10 parts of formic acid to give a pH of 6. The measured cationic charge is 0.7 meq/g.

Example 8

280.8 parts of sorbitol are mixed with 142 parts of glycerol and heated to 90°C with stirring to form a solution, which is then cooled to 80°C. Two parts of boron trifluoride acetic acid complex are added and the mixture is stirred for further 10 minutes. 43.5 parts of epichlorohydrin are added at 80°C and when the exothermic reaction has started, further 802.4 parts of epichlorohydrin are added dropwise over one hour at 80-85°C with cooling. Then the reaction mixture is cooled to 50°C and the atmosphere in the reaction vessel is evacuated. 347.2 parts of an aqueous 60 % dimethylamine solution are pulled in and the reaction mixture is heated slowly to 90°C and held for one hour. The reaction mixture is then cooled to 50°C and the vacuum is released. 361.6 parts of 32 % sodium hydroxide, 292.0 parts of water and 1720.0 parts of a 13 % aqueous solution of the sodium salt of the optical brightener of formula

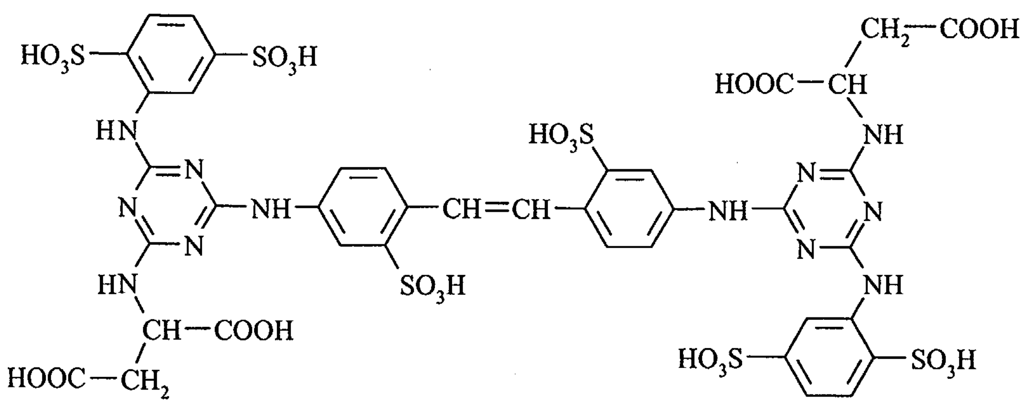

(2)

are added. The mixture is held at 50 - 60°C and the mixture slowly thickens as it polymerises. Finally when the reaction mixture reaches the viscosity of 1000 cP the reaction is stopped by the addition of 49.2 parts of formic acid to give a pH of 5-6.

Production of Coating Compositions (P)

Coating Composition (P1)

30 parts of Polyvinyl alcohol POVAL 105 in the form of an aqueous 10 % solution, are mixed with 60 parts of SIPERNAT 570 (precipitated silica of a mean particle size of 6.7 µm, the particles ranging in size in the scope of 2 to 10 µm, a specific surface of 750 $m^2/g$, a pH at 5 % concentration in water of 6.0 and an $SiO_2$-content referred to the ignited form of 99 % measured according to ISO 3262/17). When the precipitated silica has uniformly distributed throughout the aqueous mixture, 40 parts of colloidal silica, in the form of a 30 % hydrosol CARTACOAT K 303 A, of an average particle size of 50 nm, a specific surface of 50 $m^2/g$ and a pH of 9, is stirred in and then 10 parts of the polymer of Example 1, in the form of the produced aqueous solution, is also stirred in. The obtained coating composition has a viscosity of 400 mPa·s and a pH of 7.

Analogously to the polymer of Example 1 the polymers of Examples 2-5 may be employed.

Coating Composition (P2)

The procedure described for Coating Composition (P1) is repeated, with the difference that instead of the 60 parts of SIPERNAT 570 there are employed 60 parts of SIPERNAT 310 (precipitated silica of a mean particle size of 5.5 µm, the particles ranging in size in the scope of 2 to 10 µm, a specific surface of 750 $m^2/g$, a pH at 5 % concentration in water of 6.0 and an $SiO_2$-content referred to the ignited form of 99 % measured according to ISO 3262/17).

Coating Composition (P3)

30 parts of Polyvinyl alcohol POVAL 105 in the form of an aqueous 10 % solution, are mixed with 60 parts of SIPERNAT 570 (precipitated silica of a mean particle size of 6.7 µm, the particles ranging in size in the scope of 2 to 10 µm, a specific surface of 750 $m^2/g$, a pH at 5 % concentration in water of 6.0 and an $SiO_2$-content referred to the ignited form of 99 % measured according to ISO 3262/17). When the precipitated silica has uniformly distributed throughout the aqueous mixture, 40 parts of colloidal silica, in the form of a 30 % hydrosol CARTACOAT K 303 A, of an average particle size of 50 nm, a specific surface of 50 $m^2/g$ and a pH of 9, is stirred in and then 5 parts of the polymer of Example 1, in the form of the produced aqueous solution, is also stirred in, followed by 15 parts of an 18.4 % aqueous solution of the sodium salt of the optical brightener of formula (1).

Coating Composition (P4)

The procedure described for Coating Composition (P1) is repeated, with the difference that instead of the 30 parts of Polyvinyl alcohol POVAL 105 there are employed 30 parts of Polyvinyl alcohol POVAL 117.

Coating Composition (P5)

The procedure described for Coating Composition (P1) is repeated, with the difference that instead of the 60 parts of SIPERNAT 570 there is employed a mixture of 48 parts of SIPERNAT 570 and 12 parts of fumed silica AEROSIL MOX 170 (cofumed oxide consisting of silicon dioxide and 1 % of aluminium oxide as an agglomerate of primary particles of average particle size = 15 nm, with a specific surface of 170 $m^2/g$), in the form of its aqueous dispersion AEROSIL K 315 (with an $SiO_2$ content of 15 % and a pH of 5-6).

Coating Composition (P6)

The procedure described for Coating Composition (P1) is repeated, with the difference that the 10 parts of the polymer of Example 1, in the form of the produced aqueous solution, are replaced by 10 parts of the polymer of Example 6, in the form of the produced aqueous solution.

Coating Composition (P7)

The procedure described for Coating Composition (P1) is repeated, with the difference that the 10 parts of the polymer of Example 1, in the form of the produced aqueous solution, are replaced by a mixture of 5 parts of the polymer of Example 1, in the form of the produced aqueous solution, and 15 parts of the product of Example 7, in the form of the produced aqueous solution.

Coating Composition (P8)

The procedure described for Coating Composition (P7) is repeated, with the difference that instead of the product of Example 7 there is employed the same quantity of the product of Example 8.

Coating Composition (P9)

The procedure described for Coating Composition (P1) is repeated, with the difference that instead of the 60 parts of SIPERNAT 570 and 40 parts of colloidal silica there are employed 90 parts of JETCOAT PCC (of SMI, USA) (microcrystalline calcium carbonate of a mean particle size of about 6 μm and a specific surface of 80 $m^2/g$) and 10 parts of colloidal silica, and instead of 30 parts of POVAL 105 there are employed 20 parts thereof.

Gloss Coating Composition (PG1)

A polymerisation vessel is charged with 380 parts of water, 2 parts of sodium ($C_{7-21}$-alkyl)-allyl-sulphosuccinate and 1 part of styrenesulphonic acid, stirred to dissolve the components and heated to 80°C. 15 parts of 2 % potassium persulphate solution are added and 97 parts of a monomer mixture of 2 parts of vinyltriethoxysilane, 79 parts of styrene, 3 parts of methacrylic acid and 13 parts of methyl methacrylate is added in four portions at intervals of 30 minutes and polymerisation is allowed to proceed over a total period 2 hours. After completion of the addition the reaction mixture is matured for one hour giving a bluish white synthetic resin emulsion of an average particle size of the emulsified particles of 35 nm. 100 parts of this emulsion are mixed with 30 parts of colloidal silica (added as a hydrosol of 30 % concentration) followed by 5 parts of thickener polyvinylalcohol (as a 5 % aqueous dilution) and 2 parts of polyethylene wax releasing agent and sufficient water to give a coating composition of 10 % dry substance content.

Comparative Coating Composition (Q1)

The procedure described for Coating Composition (P1) is repeated, with the difference that the 10 parts of the polymer of Example 1, in the form of the produced aqueous solution, are replaced by 10 parts of poly(N,N-diallyl-N, N-dimethylammonium chloride) in the form of CARTAFIX VXU (of Clariant).

Comparative Coating Composition (Q2)

The procedure described for Coating Composition (P9) is repeated, with the difference that the 10 parts of the polymer of Example 1, in the form of the produced aqueous solution, are replaced by 10 parts of poly(N,N-diallyl-N, N-dimethylammonium chloride) in the form of CARTAFIX VXU (of Clariant).

Comparative Coating Composition (Q3)

The procedure described for Coating Composition (P3) is repeated, with the difference that the 10 parts of the polymer of Example 1, in the form of the produced aqueous solution, are replaced by 10 parts of poly(N,N-diallyl-N, N-dimethylammonium chloride) in the form of CARTAFIX VXU (of Clariant).

Comparative Coating Composition (Q4)

The procedure described for Coating Composition (P7) is repeated, with the difference that the 10 parts of the polymer of Example 1, in the form of the produced aqueous solution, are replaced by 10 parts of poly(N,N-diallyl-N, N-dimethylammonium chloride) in the form of CARTAFIX VXU (of Clariant).

Application Examples

Application Example A1

Coating Composition (P1) is applied in a coating weight of 14 $g/m^2$, referred to the dry form, to a commercial 90 $g/m^2$ neutral-sized (with conventional alkyl ketene dimer), bleached paper base sheet, using an automatic wire-wound bar applicator with a standard speed setting and a standard load on the bar. The coated paper is dried for 2 minutes at 105°C in a drying stove and subsequently 90 seconds in a drying press.

Application Examples A2-A9

The procedure described in Application Example A1 is repeated with the difference that instead of Coating Composition (P1) there is used the same application weight of each of Coating Compositions (P2), (P3), (P4), (P5), (P6), (P7), (P8) and (P9).

Comparative Application Example A10

The procedure described in Application Example A1 is repeated with the difference that instead of Coating Composition (P1) there is used the same application weight of Coating Composition (Q1).

Comparative Application Example A11

The procedure described in Application Example A3 is repeated with the difference that instead of Coating Composition (P3) there is used the same application weight of Coating Composition (Q3).

Comparative Application Example A12

The procedure described in Application Example A7 is repeated with the difference that instead of Coating Composition (P7) there is used the same application weight of Coating Composition (Q4).

Comparative Application Example A13

The procedure described in Application Example A9 is repeated with the difference that instead of Coating Composition (P10) there is used the same application weight of Coating Composition (Q2).

Application Example B1

Coating Composition (P1) is applied in a coating weight of 14 $g/m^2$, referred to the dry form, to a commercial corona discharge treated polyester (polyethyleneterephthalate) support foil of 100 µm thickness. The coated foil is dried for 3 minutes at 100°C.

Application Examples B2-B9

The procedure described in Application Example B1 is repeated with the difference that instead of Coating Composition (P1) there is used the same application weight of each of Coating Compositions (P2), (P3), (P4), (P5), (P6), (P7), (P8) and (P9).

Comparative Application Example B10

The procedure described in Application Example B 1 is repeated with the difference that instead of Coating Composition (P1) there is used the same application weight of Coating Composition (Q1).

Comparative Application Example B11

The procedure described in Application Example B3 is repeated with the difference that instead of Coating Composition (P3) there is used the same application weight of Coating Composition (Q3).

Comparative Application Example B12

The procedure described in Application Example B7 is repeated with the difference that instead of Coating Composition (P7) there is used the same application weight of Coating Composition (Q4).

Comparative Application Example B13

The procedure described in Application Example B9 is repeated with the difference that instead of Coating Composition (P9) there is used the same application weight of Coating Composition (Q2).

Application Example C

The coated paper of Application Example A1 is top-coated, before drying, with Gloss Coating Composition (PG1) in a coating weight of 2 g/$m^2$, based on dry substance, by means of a cast drum with a heated specular surface at 80°C, dried and released, giving a glossy top coat.

Jet-ink printing Examples

Print Example 1

The paper coated according to Application Example A1 is printed in a CANON 630 Printer in a multicolour base pattern (bordering fields in yellow, blue and magenta and combined colours) with marks in black and in colour traversing the coloured fields. The quality of the colour prints and of the black-on-colour and colour-on-other-colour prints, in particular as measured for sharpness, feathering, bleeding (especially black on yellow), mottling and showing through, is surprisingly high, and also the light fastness is satisfactory.

Print Example 2

The paper coated according to Application Example A1 is printed in an EPSON STYLUS COLOR 760 Printer analogously to Print Example 1, giving also in this printer a surprisingly high quality of the print in the stated measurements, and also the light fastness is satisfactory.

The substrates coated according to Application Examples A2 to A9 and C subjected to the same printings as in Print Examples 1 and 2 give also very satisfactory printing qualities. For comparison purposes also the substrate coated according to Comparative Application Examples A10 - A13 is subjected to the same printing.

Similarly, the substrates coated according to Application Examples B1 to B9 subjected to analogous printings as in Print Examples 1 and 2 give also very satisfactory printing qualities and also the light fastness is satisfactory. For comparison purposes also the substrate coated according to Comparative Application Examples B10 - B13 is subjected to the same printing.

The prints according to the above Print Examples 1 and 2 on the substrates coated according to Application Examples A1 to A9 and Comparative Application Examples A10 - A13 are measured as for ink-jet print quality (sharpness, feathering, bleeding, mottling and showing through) and lightfastness, and the coatings according to Application Examples A3, A7 and A8 and Comparative Application Examples A11 and A12 are also compared as for whiteness. The prints according to the above Print Examples 1 and 2 on the substrates coated according to Application Examples B1 to B9 and Comparative Application Examples B10 - B13 are also measured as for ink-jet print quality (sharpness, feathering, bleeding, mottling and showing through) and lightfastness and the coatings according to Application Examples B3, B7 and B8 and Comparative Application Examples B11 and B12 are also compared as for whiteness. The results in comparison with the respective Comparative Examples taken as a reference are rated

0 = reference,

+ = improved

++ = highly improved as shown in the following Tables 1 and 2. Since the results for the substrates coated according to Application Examples A1-A13 are practically identical to those on the substrates coated according to Application Examples B1-B13 the first column of the table shows both substrates.

Table I

| Print Example 1 on the substrate coated according to Application Example | Print quality | Light fastness | Whiteness |
|---|---|---|---|
| A1 or B1 | ++ | + | |
| A2 or B2 | ++ | + | |
| A3 or B3 | ++ | + | ++ |
| A4 or B4 | ++ | + | |
| A5 or B5 | + | + | |
| A6 or B6 | ++ | + | |
| A7 or B7 | ++ | + | ++ |

Table I (continued)

| Print Example 1 on the substrate coated according to Application Example | Print quality | Light fastness | Whiteness |
|---|---|---|---|
| A8 or B8 | ++ | + | ++ |
| A10 or B10 | 0 | 0 | |
| A11 or B11 | 0 | 0 | 0 |
| A12 or B12 | 0 | 0 | 0 |
| A9 or B9 | + | + | |
| A13 or B13 | 0 | 0 | |

Table 2

| Print Example 2 on the substrate coated according to Application Example | Print quality | Light fastness | Whiteness |
|---|---|---|---|
| A1 or B1 | ++ | + | |
| A2 or B2 | ++ | + | |
| A3 or B3 | ++ | + | ++ |
| A4 or B4 | ++ | + | |
| A5 or B5 | + | + | |
| A6 or B6 | ++ | + | |
| A7 or B7 | ++ | + | ++ |
| A8 or B8 | ++ | + | ++ |
| A10 or B10 | 0 | 0 | |
| A11 or B11 | 0 | 0 | 0 |
| A12 or B12 | 0 | 0 | 0 |
| A9 or B9 | + | + | |
| A13 or B13 | 0 | 0 | |

## Claims

**1.** An aqueous, white mineral pigment-based coating composition (P) comprising

(A) white mineral pigment particles ($A_1$) and ($A_2$), wherein, referred to the dry forms,

($A_1$) are colloidal, non-porous white mineral pigment particles of an average particle size in the range of 5 to 80 nm, wherein > 99 % of the particles are of a particle size < 100 nm,
and ($A_2$) are micro-porous white mineral pigment particles of an average particle size in the range of 0.5 to 25 µm, wherein > 99 % of the particles are of a particle size in the range of 0.1 to 100 µm,

(B) a binder,
and (C) a cationic, crosslinked polymer obtainable by exhaustive reaction of at least one crosslinking at least difunctional amine (G) and optionally a monofunctional amine (H) with a chloroterminated addition product (F) of epichlorohydrin to an oligofunctional alcohol (E), and optionally
(D) one or more formulation additives.

**2.** An aqueous, silica-based coating composition (P) according to Claim 1, wherein

$(A_1)$ are colloidal silica particles
and $(A_2)$ are silica particles selected from precipitated silica, silica xerogel or a blend of precipitated silica and/or silica xerogel with fumed silica.

**3.** An aqueous, silica-based coating composition (P) according to Claim 1 or 2, wherein the specific surface of $(A_2)$ in the dry form is ≥ 200 $m^2/g$, preferably > 400 $m^2/g$.

**4.** An aqueous, white mineral pigment-based coating composition (P) according to any one of Claims 1 to 3, wherein (B) is selected from

$(B_1)$ a non-ionic binder, which is colloidally soluble in water
and $(B_2)$ an emulsified latex.

**5.** An aqueous, white mineral pigment-based coating composition (P) according to any one of Claims 1 to 4, wherein (C) is $(C_1)$ a cationic, polyquaternary, crosslinked polymer from exhaustive reaction of at least one crosslinking amine with a chloroterminated addition product of epichlorohydrin to an oligofunctional aliphatic alcohol.

**6.** An aqueous, white mineral pigment-based coating composition (P) according to any one of Claims 1 to 5, wherein (D) is selected from

$(D_1)$ agents for influencing the optical aspect of the coating,
$(D_2)$ agents for improving the stability against micro-organisms,
$(D_3)$ electrolytes for pH-adjustment,
$(D_4)$ agents influencing the physical form of the composition,
$(D_5)$ additives for influencing the use properties of the coated substrate
and $(D_6)$ stabilisers against deterioration by ambient oxygen and/or UV radiation.

**7.** An aqueous, white mineral pigment-based coating composition (P) according to Claims 6,
wherein
$(D_1)$ is an anionic optical brightener of the 4,4'-bis(triazinylamino)stilbene-2,2'-disulphonic acid series, which is optionally combined with a cationic polymer $(C_1)$ as defined in Claim 5.

**8.** An aqueous, white mineral pigment-based coating composition (P) according to Claim 7,
wherein the anionic optical brightener is employed in the form of a preformed water soluble combination with $(C_1)$ in such a proportion thereof to the total of (C) present that the overall combination of (C) with $(D_1)$ is distinctly cationic.

**9.** A process for the production of an aqueous, white mineral pigment-based coating composition (P) according to any one of Claims 1 to 8, wherein an aqueous solution of (C) is admixed with an aqueous slurry of (A) and (B), optionally in the presence of a component (D), and any optional further (D) is added.

**10.** Use of (P) according to any one of Claims 1-8 for coating a support (S) suitable for the production of a coated jet-ink recording substrate $(J_S)$.

**11.** Use of (P) according to Claim 10 wherein the support (S) is selected from paper or an optionally corona-treated plastic film or foil.

**12.** A process for the production of a coated jet-ink recording substrate $(J_S)$, wherein a coating composition (P) according to any one of Claims 1 to 8 is applied to a support (S) suitable for the production of a coated jet-ink recording substrate and dried.

**13.** Process according to Claim 12 wherein the support is selected from

$(S_1)$ paper
or $(S_2)$ an optionally corona-treated plastic film or foil.

**14.** A process according to Claim 12 or 13, wherein for the production of a gloss top coated substrate $(J_{SG})$ the support coated with coating composition (P) is is overcoated with a gloss top coating composition $(P_G)$ and dried.

**15.** The coated jet-ink recording substrate ($J_S$) or ($J_{SG}$) produced according to any one of Claims 12-14

**16.** Use of the coated substrate ($J_S$) or ($J_{SG}$) according to Claim 15 as a substrate for ink-jet recording.

**17.** Use according to Claim 15 as a substrate for multicolour ink-jet printing in ink-jet printing equipments of high resolution.

**18.** Use according to Claim 16 or 17 in ink-jet printers, copying machines or facsimile receiving machines.

European Patent Office

# EUROPEAN SEARCH REPORT

Application Number
EP 03 25 3327

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 99 67317 A (CLARIANT FINANCE BVI LTD;CLARIANT INT LTD ; GRAHAM MARK D (GB); FA) 29 December 1999 (1999-12-29)<br>* Application Example B *<br>* claims 1,9 *<br>--- | 1-18 | B41M5/00<br>C09D171/03<br>C08L71/03<br>C08K3/34<br>C08K3/36 |
| Y,D | US 5 965 244 A (TAYLOR ALAN RICHARD ET AL) 12 October 1999 (1999-10-12)<br>* claims 1,24; figure 1; example 1 *<br>--- | 1-18 | |
| A | WO 03 033568 A (CLARIANT INT LTD ;FARRAR JOHN MARTIN (GB))<br>24 April 2003 (2003-04-24)<br>* claims 1,12 *<br>--- | 1-18 | |
| A | EP 0 938 980 A (OJI PAPER CO)<br>1 September 1999 (1999-09-01)<br>* claims 1,4 *<br>* examples 1-1,1-2 *<br>--- | 1-18 | TECHNICAL FIELDS SEARCHED (Int.Cl.7) |
| A | US 5 650 003 A (CURTIS JERRY LEON ET AL)<br>22 July 1997 (1997-07-22)<br>* claims 1,11 *<br>--- | 1-18 | B41M<br>C09D<br>C08L<br>C08K |
| A | US 2002/045035 A1 (NOJIMA TAKAHIKO ET AL)<br>18 April 2002 (2002-04-18)<br>* claim 1 *<br>----- | 1-18 | |

The present search report has been drawn up for all claims

| Place of search | Date of completion of the search | Examiner |
|---|---|---|
| THE HAGUE | 29 October 2003 | O'Sullivan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 25 3327

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2003

| Patent document cited in search report | | Publication date | Patent family member(s) | | | Publication date |
|---|---|---|---|---|---|---|
| WO 9967317 | A | 29-12-1999 | AT | 236946 | T | 15-04-2003 |
| | | | AU | 757908 | B2 | 13-03-2003 |
| | | | AU | 4284399 | A | 10-01-2000 |
| | | | BR | 9911417 | A | 20-03-2001 |
| | | | CA | 2335229 | A1 | 29-12-1999 |
| | | | CN | 1306552 | T | 01-08-2001 |
| | | | DE | 69906777 | D1 | 15-05-2003 |
| | | | DE | 69906777 | T2 | 16-10-2003 |
| | | | EP | 1127087 | A1 | 29-08-2001 |
| | | | WO | 9967317 | A1 | 29-12-1999 |
| | | | JP | 2002518568 | T | 25-06-2002 |
| | | | NO | 20006589 | A | 22-02-2001 |
| | | | US | 6426382 | B1 | 30-07-2002 |
| | | | ZA | 200007043 | A | 29-11-2001 |
| US 5965244 | A | 12-10-1999 | AU | 1269399 | A | 17-05-1999 |
| | | | CA | 2305526 | A1 | 06-05-1999 |
| | | | EP | 1024950 | A1 | 09-08-2000 |
| | | | JP | 2001520949 | T | 06-11-2001 |
| | | | WO | 9921703 | A1 | 06-05-1999 |
| WO 03033568 | A | 24-04-2003 | WO | 03033568 | A1 | 24-04-2003 |
| EP 0938980 | A | 01-09-1999 | JP | 11240243 | A | 07-09-1999 |
| | | | JP | 11321067 | A | 24-11-1999 |
| | | | DE | 69907993 | D1 | 26-06-2003 |
| | | | EP | 0938980 | A2 | 01-09-1999 |
| | | | US | 6632488 | B2 | 14-10-2003 |
| US 5650003 | A | 22-07-1997 | AU | 1423397 | A | 14-07-1997 |
| | | | WO | 9722669 | A1 | 26-06-1997 |
| US 2002045035 | A1 | 18-04-2002 | JP | 2002067492 | A | 05-03-2002 |

EPO FORM P0459

For more details about this annex : see Official Journal of the European Patent Office, No. 12/82